# FASCICULE DE BREVET EUROPEEN

(11) **EP 4 669 877 B1**
(45) Date de publication et mention de la délivrance du brevet: **19.08.2026**
(21) Numéro de dépôt: 23813018.1
(22) Date de dépôt: 02.11.2023
(51) Int. Cl.: F16D 65/00

(54) **DISPOSITIF DE FREINAGE A FRICTION**
REIBUNGSBREMSVORRICHTUNG
FRICTION BRAKING DEVICE

(30) Priorité: 21.02.2023 FR 2301602
(43) Date de publication de la demande: 31.12.2025
(73) Titulaire: Tallano Technologies, 75015 Paris (FR)
(72) Inventeur: ADAMCZAK, Loïc, 01360 LOYETTES (FR); BONNAUD, Pascal, 78990 ELANCOURT (FR)
(74) Mandataire: Plasseraud IP
(86) Numéro de dépôt international: PCT/FR2023/051724
(87) Numéro de publication internationale: WO 2024/175836

(56) Documents cités:
- DE-A1- 4 240 873
- FR-A1- 3 069 832
- JP-A- 2007 192 268

## Description

### Domaine technique

La présente divulgation relève du domaine des dispositifs de freinage à friction.

### Technique antérieure

L'invention concerne un dispositif de freinage à friction destiné à équiper par exemple un véhicule routier ou ferroviaire, ou encore une machine stationnaire à rotor telle qu'une éolienne ou une machine industrielle.

Le document JP2007192268 montre un tel dispositif. Aussi, un tel dispositif de freinage est notamment connu du document FR 3 057 040 B1, au nom de la Demanderesse. Celui-ci comporte classiquement un étrier dit flottant, destiné à être monté sur un support d'étrier fixe, et deux plaquettes montées de part et d'autre d'un disque de frein solidaire d'une roue d'un véhicule ou d'un rotor d'une machine stationnaire par exemple. Le dispositif comporte en particulier une plaquette dite intérieure, déplacée en translation par un piston et destinée à venir en appui sur une première surface du disque, et une plaquette dite extérieure, destinée à venir en appui sur la seconde surface du disque, opposée à la première surface. Le piston comporte une partie soumise à une pression d'un fluide hydraulique, par exemple de l'huile, exercée dans une chambre de pression. L'augmentation de la pression dans ladite chambre provoque le déplacement axial du piston par rapport à l'étrier et, ainsi, repousse la plaquette intérieure contre la première surface du disque. Simultanément, la partie arrière de l'étrier flottant repousse la plaquette extérieure contre la seconde surface du disque. Le disque est ainsi freiné par un couple résistant issu du frottement des plaquettes sur les surfaces correspondantes.

Lorsque la pression dans la chambre diminue, le piston est rétracté et l'étrier flottant est déplacé de façon à libérer les plaquettes. Ces dernières peuvent alors être écartées du disque lors de la rotation de celui-ci, du fait d'un léger voile naturellement présent dans le disque.

Chaque plaquette comporte une semelle et une garniture de friction. La garniture est destinée à venir en contact avec le disque, s'usant par abrasion au fur et à mesure du temps. L'abrasion des garnitures génère des particules et des poussières qui peuvent être nocives. Afin de limiter l'émission de telles particules, il est connu de prévoir des moyens permettant de collecter et d'aspirer les particules émises. Pour cela, chaque plaquette comporte une rainure ménagée dans la garniture et située à proximité d'un bord latéral de la plaquette, et un orifice d'aspiration débouchant dans ladite rainure et débouchant axialement dans la semelle, à l'opposé de la rainure. Une conduite permet de relier chaque orifice d'aspiration à un dispositif d'aspiration et de filtration.

Afin de limiter la libération des particules à l'extérieur du dispositif, il est nécessaire que la liaison entre chaque conduite d'aspiration et chaque orifice d'aspiration des plaquettes soit étanche. Dans le cas de la plaquette intérieure, la conduite d'aspiration correspondante peut venir directement en appui étanche sur l'orifice d'aspiration. Toutefois, dans le cas de la plaquette extérieure, la partie arrière du piston présente une épaisseur importante qui rend difficile l'appui étanche direct de la conduite d'aspiration sur l'orifice d'aspiration de la plaquette extérieure.

Par conséquent, il est nécessaire de trouver une solution pour rendre étanche la connexion entre la plaquette extérieure et la conduite d'aspiration respective.

### Résumé

La présente divulgation vient améliorer la situation.

A cet effet, il est proposé un dispositif de freinage à friction comportant un étrier, au moins une plaquette mobile en translation selon un axe par rapport à l'étrier, ladite plaquette étant destinée à coopérer avec un disque de frein, ladite plaquette comportant au moins une zone d'aspiration de particules comportant un orifice d'aspiration, caractérisé en ce que le dispositif comporte en outre une conduite d'aspiration fixée sur l'étrier, l'étrier comportant un orifice d'aspiration apte à venir en appui étanche sur la plaquette, en regard de l'orifice d'aspiration de ladite plaquette, de manière à relier ladite conduite d'aspiration et ladite zone d'aspiration de la seconde plaquette.

L'étanchéité entre la conduite d'aspiration et la plaquette est donc assurée grâce à l'appui étanche entre l'orifice d'aspiration de l'étrier et l'orifice d'aspiration de la plaquette. On limite ainsi le nombre de pièces dans le dispositif de freinage.

On note que l'orifice d'aspiration de l'étrier peut être apte à venir en appui de façon étanche sur l'orifice d'aspiration de la seconde plaquette, en cas de freinage, c'est-à-dire lorsque la plaquette est poussée contre le disque. Des particules sont produites et doivent par conséquent être aspirées dans de telles phases de freinage. C'est donc également dans ces phases qu'une étanchéité entre la conduite d'aspiration et l'orifice d'aspiration de la plaquette doit être assurée.

Hors des phases de freinage, une telle étanchéité est toujours assurée, ce qui permet d'aspirer les particules après le freinage, au moins pendant une phase, dite de nettoyage, immédiatement postérieure aux phases de freinage.

La conduite d'aspiration peut comporter une première extrémité fixée directement ou indirectement à l'étrier et une seconde extrémité destinée à être reliée à un dispositif d'aspiration et de filtration. On note que grâce à la fixation de la conduite d'aspiration sur l'étrier, on évite que la conduite d'aspiration exerce des efforts sur la plaquette. En effet, au lieu de fixer la conduite d'aspiration directement sur la plaquette, on prévoit l'orifice d'aspiration de l'étrier à travers lequel les particules issues du freinage sont aspirées par la conduite d'aspiration.

Selon un aspect, ledit orifice d'aspiration de la plaquette peut avoir un diamètre inférieur au diamètre de l'orifice d'aspiration de l'étrier. On garantit ainsi qu'un maximum de particules émises lors de la coopération entre la plaquette et le disque de frein sont aspirées par la conduite d'aspiration. En effet, si l'orifice d'aspiration de l'étrier avait le même diamètre ou un diamètre inférieur à celui de l'orifice d'aspiration de la plaquette, le risque d'accumulation de particules à l'interface entre les deux orifices d'aspiration serait très important.

Selon un aspect, une première partie d'extrémité de l'orifice d'aspiration de l'étrier peut comprendre un épaulement sensiblement annulaire conformé pour recevoir ladite conduite d'aspiration.

L'étanchéité entre l'étrier et la conduite d'aspiration est ainsi améliorée, étant donné que la conduite d'aspiration est partiellement introduite dans l'orifice d'aspiration de l'étrier. Ceci limite le risque que des particules soient expulsées vers l'extérieur du dispositif de freinage à l'interface entre l'étrier et la conduite d'aspiration.

Ladite première partie d'extrémité correspond en particulier à la partie d'extrémité de l'orifice d'aspiration de l'étrier qui est opposée à la plaquette. Grâce à l'épaulement, le diamètre de l'orifice d'aspiration de l'étrier augmente à sa première partie d'extrémité. La conduite d'aspiration peut ainsi être reçue dans l'orifice d'aspiration de l'étrier tout en garantissant qu'un canal de la conduite d'aspiration dans lequel s'écoulent les particules puisse avoir un diamètre égal ou supérieur à celui de l'orifice d'aspiration de l'étrier. On limite ainsi le risque d'accumulation de particules à l'interface entre l'orifice d'aspiration de l'étrier et la conduite d'aspiration.

La conduite d'aspiration peut en particulier être reçue de manière serrée ou ajustée dans ledit épaulement.

Selon un aspect, ladite conduite d'aspiration est réalisée dans la continuation d'une pièce de fonderie flottante de l'étrier. En particulier, la seconde conduite peut être faite d'un seul tenant avec la pièce de fonderie flottante de l'étrier.

Selon un aspect, ladite conduite d'aspiration peut être fixée à l'étrier à partir d'au moins un organe de liaison amovible. La conduite d'aspiration peut ainsi être remplacée facilement en cas d'usure. Par exemple, la conduite d'aspiration peut être fixée sur l'étrier par des vis.

Selon un aspect, l'orifice d'aspiration de la plaquette peut être compris dans une première face de la plaquette, la première face de la plaquette étant métallique et venant en appui étanche sur une première face métallique de l'étrier sur laquelle débouche l'orifice d'aspiration de l'étrier. L'étanchéité entre la plaquette et l'étrier est donc assurée par un contact métal-métal.

Selon un exemple, l'étrier est un étrier flottant apte à être déplacé axialement en translation par rapport à un support d'étrier, le dispositif comportant une première plaquette dite plaquette intérieure et une seconde plaquette dite plaquette extérieure, la première plaquette étant actionnée directement par un piston, la seconde plaquette étant actionnée directement par une partie arrière de l'étrier flottant, une première conduite d'aspiration étant apte à être reliée à une zone d'aspiration de particules de la première plaquette, une seconde conduite d'aspiration étant apte à être reliée à une zone d'aspiration de particules de la seconde plaquette, chacune des zones d'aspiration de particules de la première plaquette et la seconde plaquette comportant un orifice d'aspiration respectif.

Dans une telle configuration à étrier flottant, un seul piston permet d'actionner à la fois directement la première plaquette et, indirectement par l'intermédiaire de l'étrier flottant, la seconde plaquette. Les particules émises par chaque plaquette sont aspirées par une conduite dédiée.

Dans ce cas, la seconde plaquette correspond à celle sur laquelle l'orifice d'aspiration de l'étrier vient en appui étanche comme expliqué ci-avant.

Le présent document concerne également un système de freinage comportant un disque de frein et un dispositif de freinage à friction du type précité.

Le présent document concerne également un véhicule comportant un système de freinage du type précité.

Le présent document concerne également une machine stationnaire à rotor comportant un système de freinage du type précité.

### Brève description des dessins

D'autres caractéristiques, détails et avantages apparaîtront à la lecture de la description détaillée ci-après, et à l'analyse des dessins annexés, sur lesquels :
**Fig. 1**

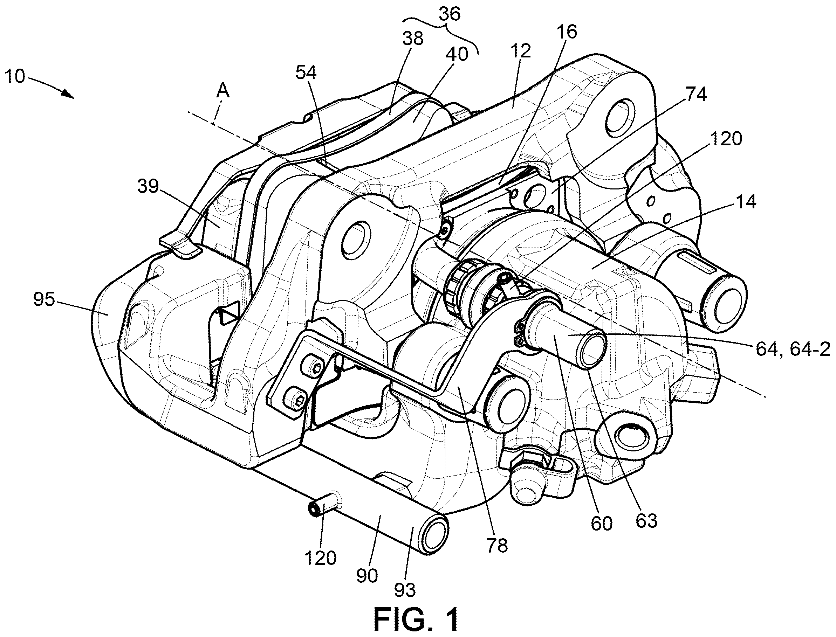

   [Fig. 1] montre une vue schématique en perspective d'un dispositif de freinage à friction selon un exemple de réalisation.
**Fig. 2**

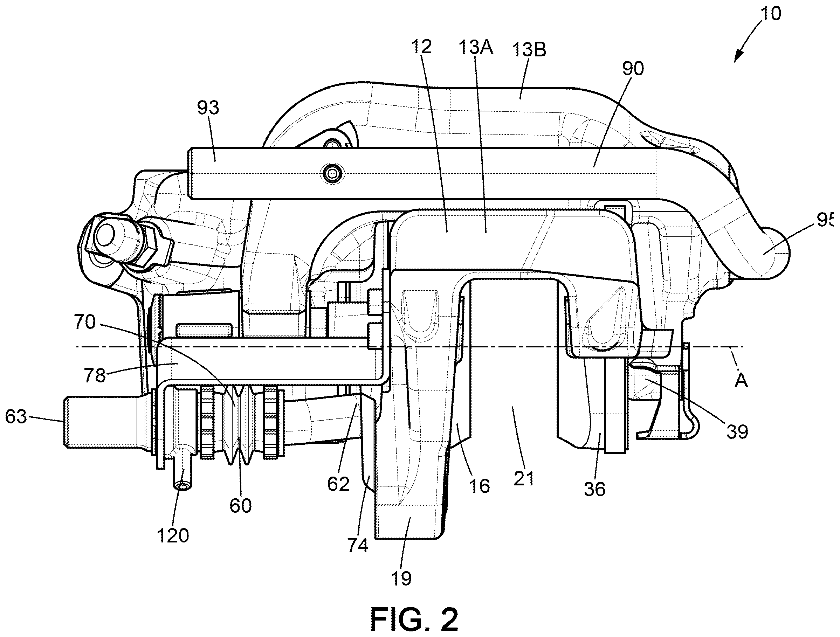

   [Fig. 2] montre une vue schématique de côté du dispositif de freinage à friction de la figure 1.
**Fig. 3**

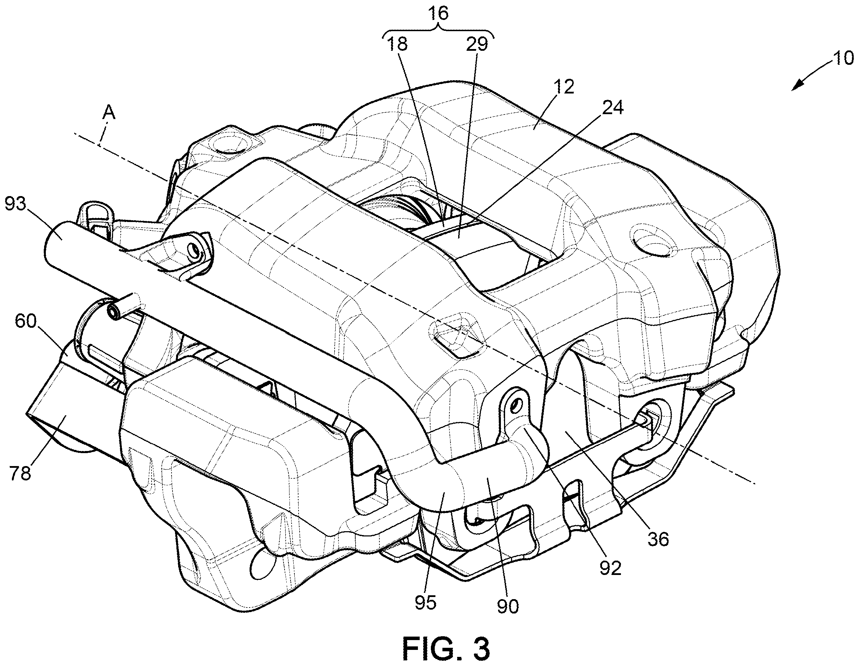

   [Fig. 3] montre une autre vue schématique en perspective du dispositif de freinage à friction de la figure 1.
**Fig. 4**

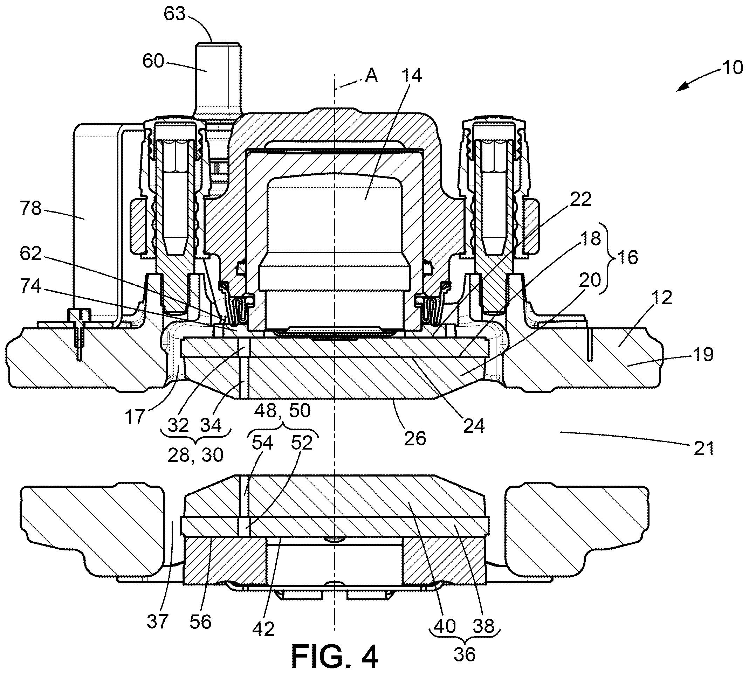

   [Fig. 4] montre une vue schématique d'une coupe frontale du dispositif de freinage à friction de la figure 1.
**Fig. 5**

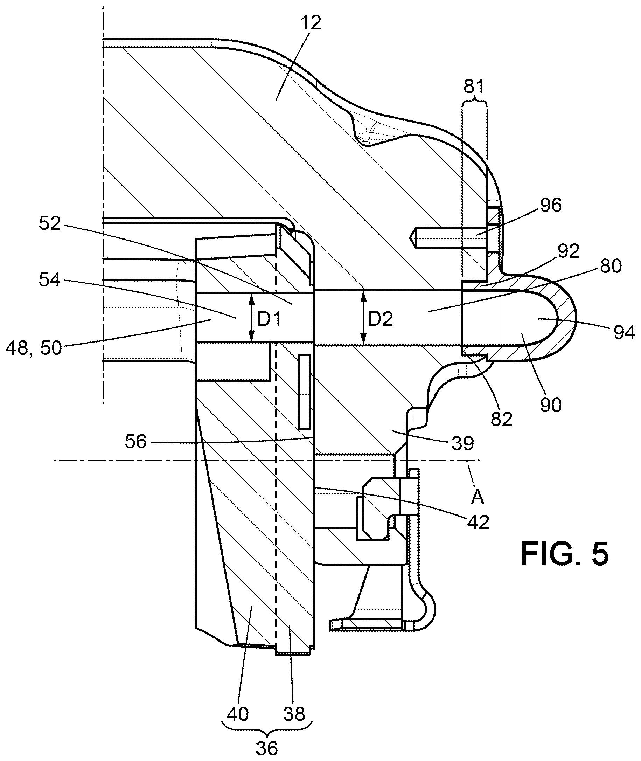

   [Fig. 5] montre une vue schématique partielle d'une coupe latérale du dispositif de freinage à friction de la figure 1 montrant une plaquette dudit dispositif.

### Description des modes de réalisation

La figure 1 montre une vue schématique en perspective d'un exemple de dispositif de freinage à friction 10. Le dispositif 10 peut être employé dans un système de freinage, par exemple dans un véhicule routier ou ferroviaire, mais aussi dans une machine stationnaire à rotor, telle qu'une éolienne ou une machine industrielle.

Le dispositif de freinage à friction 10 comprend un étrier 12. Sur les figures 1 à 5, l'étrier 12 est un étrier flottant., il peut se déplacer en translation par rapport à un support d'étrier (non illustré) sur lequel il est monté.

L'étrier 12 comprend une pièce fixe 13A et une pièce de fonderie flottante 13B, visibles sur la figure 2.

Le dispositif 10 comprend en outre un piston 14 monté sur l'étrier 12. Le piston 14 peut comporter une partie soumise à une pression d'un fluide hydraulique, par exemple de l'huile, exercée dans une chambre de pression. L'augmentation de la pression dans ladite chambre provoque le déplacement du piston 14 par rapport à l'étrier selon une direction axiale A. Dans ce qui suit, par « axial » ou « axialement » on entend sensiblement parallèlement à la direction A.

Une première plaquette 16, aussi dite plaquette intérieure, est prévue dans le dispositif 10. En particulier, la plaquette 16 peut être agencée dans un logement 17 (visible sur la figure 4) prévu dans une partie avant 19 de l'étrier 12. La plaquette 16 est par exemple montée directement en vis-à-vis axial du piston 14. En particulier, comme visible sur la figure 4, la plaquette 16 peut être au contact du piston 14. Comme il va être détaillé par la suite, la plaquette 16 est destinée à coopérer avec un disque de frein (non illustré).

La première plaquette 16 comprend une semelle 18 (aussi appelée « embase ») et une garniture 20.

La semelle 18 comprend une face externe 22 et une face interne 24 axialement opposées. La face externe 22 vient en appui sur le piston 14 et/ou l'étrier 12.

Une épaisseur de la semelle 18 est par exemple comprise entre 3 mm et 5 mm. Par « épaisseur de la semelle » on entend ici la dimension de la semelle 18 dans la direction axiale A.

La semelle 18 est de préférence réalisée en matériau métallique.

La garniture 20 est fixée sur la face interne 24 de la semelle 18. La garniture 20 est formée par un matériau de friction, communément appelé « ferodo ».

La garniture 20 comprend une face de friction 26 qui est axialement opposée à la face de la garniture 20 qui est fixée à la semelle 18. La face de friction 26 est destinée, lors des phases de freinage, à venir axialement en appui sur une première face du disque de frein, lequel tourne autour d'un axe sensiblement parallèle à la direction axiale A. En particulier, la face de friction 26 vient en appui de la première face du disque de frein lorsque le piston 14 se déplace selon la direction A en se rapprochant du disque de frein.

La garniture 20 et le disque relâchent des particules résultant de l'abrasion lorsque la face de friction 26 vient en appui sur le disque de frein en phase de freinage. Ceci provoque l'usure de la garniture 20 et du disque. L'épaisseur (c'est-à-dire, la dimension axiale) de la garniture 20 diminue donc progressivement lors de la vie utile de la plaquette 16.

Comme illustrée sur la figure 4, la plaquette 16 comprend une zone d'aspiration de particules 28. La zone d'aspiration de particules 28 comprend un orifice d'aspiration 30 formé par une première cavité 32 agencée dans la semelle 18 et une rainure 34 agencée dans la garniture 20. L'orifice d'aspiration s'étend par exemple sensiblement axialement.

La première cavité 32 traverse la semelle 18 entre sa face externe 22 et sa face interne 24 en regard d'au moins une portion de la rainure 34 de la garniture 20. La rainure 34 s'étend axialement entre la face de friction 26 et la seconde face de la garniture 20. Autrement dit, la profondeur de la rainure 34 est égale à l'épaisseur de la garniture 20. Aussi, les particules relâchées par abrasion peuvent être collectées dans la rainure 34, puis aspirées à travers la cavité 32 de la semelle 18.

Pour aspirer les particules collectées dans la rainure 34, le dispositif comprend une première conduite d'aspiration 60. La première conduite d'aspiration 60 comporte une première extrémité 62 et une seconde extrémité 63 opposées.

La première extrémité 62, visible notamment sur la figure 5, est apte à venir en appui de façon étanche, directement ou indirectement, sur la première plaquette 16. Avantageusement, l'extrémité 62 est apte à venir en appui étanche en regard de l'orifice d'aspiration 30 de la plaquette 16. Ainsi, la conduite d'aspiration 60 est reliée à la zone d'aspiration 28 de la plaquette 16. Ceci limite le risque d'éjection vers l'extérieur des particules formées par l'abrasion de la plaquette 16 et du disque quand ils sont au contact l'un de l'autre.

Avantageusement, l'extrémité 62 de la conduite d'aspiration 60 vient en appui étanche sur la plaquette 16 en phase de freinage. En effet, comme expliqué précédemment, lors des phases de freinage, la plaquette 16 vient axialement en appui du disque de freinage et donc, les particules sont formées par abrasion.

Hors des phases de freinage, l'étanchéité entre la conduite d'aspiration 60 et la plaquette 16 est également assurée, au moins pendant une phase de nettoyage immédiatement postérieure à la phase de freinage. Ceci permet d'aspirer les particules après le freinage.

La seconde extrémité 63 de la conduite 60 est quant à elle destinée à être reliée à des moyens d'aspiration (non illustrés). Les moyens d'aspiration sont par exemple un dispositif d'aspiration et de filtration. Un tel dispositif est configuré pour aspirer les particules formées par abrasion de la plaquette 16 et du disque de frein lorsqu'ils entrent au contact l'un de l'autre.

Dans l'exemple de réalisation non-limitatif illustré sur les figures, la conduite d'aspiration 60 est fixée sur le piston 14. La conduite 60 est ainsi fixée sur le piston 14 et non sur la plaquette 16, de sorte que la conduite 60 n'exerce pas d'effort axial sur la plaquette 16. On évite ainsi que la plaquette 16 soit rapprochée ou écartée de façon non contrôlée du disque de frein, ce qui diminue le risque d'usure prématurée de la plaquette 16 et permet de maîtriser de manière plus complète le couple de freinage.

Lorsque la conduite 60 est fixée au piston, son extrémité 62 est avantageusement apte à venir en appui de façon étanche sur la plaquette 16, en regard de l'orifice d'aspiration 30. On relie ainsi la première conduite d'aspiration 60 et la zone d'aspiration 30 de la plaquette 16.

La conduite 60 peut être fixée directement sur le piston 74. Par exemple, la conduite 60 peut venir de matière du piston 14.

Alternativement, la conduite 60 peut être fixée indirectement sur le piston 14, par exemple par une pièce additionnelle 74. La pièce additionnelle 74 est par exemple un support qui est fixé sur le piston 14, par exemple par vissage, rivetage ou soudage.

L'extrémité 62 de la conduite 60 est solidaire du support 74. Le support 74 peut comprendre un orifice (non visible sur les figures) situé en regard de l'extrémité 62 de la conduite 60. Le support 74 est ainsi apte à venir en appui de façon étanche sur la plaquette 16 de façon à ce que l'orifice d'aspiration 30 de la plaquette 16 et l'orifice du support 74 soient en regard l'un de l'autre.

Dans une alternative non illustrée, la conduite 60 pourrait être directement fixée sur la plaquette 16. Comme précédemment, l'extrémité 62 de la conduite 60 est alors apte à venir en appui de façon étanche sur la première plaquette 12, en regard de l'orifice d'aspiration 30. On relie ainsi la première conduite d'aspiration 60 et la zone d'aspiration 30 de la plaquette 16.

Comme visible sur les figures, l'étrier peut en outre comprendre un bras 78 s'étendant en forme de L et qui permet de fixer la conduite 60 à l'étrier 12.

Une seconde plaquette 36, aussi dite plaquette extérieure, est prévue dans le dispositif 10. La seconde plaquette 36 peut être agencée dans un logement 37 prévu dans une partie arrière 39 de l'étrier 12. Comme il ressort des figures, notamment de la figure 4, la seconde plaquette 36 est en vis-à-vis axial de la première plaquette 16. Un espace 21 destiné à recevoir le disque de frein est formé entre les deux plaquettes 16, 36.

La seconde plaquette 36 comprend une semelle 38 et une garniture 40. La semelle 38 et la garniture 40 sont similaires ou identiques à, respectivement, la semelle 18 et la garniture 20 décrites ci-avant. Aussi, par souci de concision, elles ne sont pas décrites en détails ci-après. On note uniquement que la seconde plaquette 36 comprend une zone d'aspiration 48 comprenant un orifice d'aspiration 50 qui est formé par une première cavité 52 et une rainure 54 similaires ou identiques à, respectivement, la première cavité 32 et la rainure 34 de la première plaquette 16. L'orifice d'aspiration 50 s'étend par exemple sensiblement axialement.

On note également, que la seconde plaquette 36, notamment la face de friction de sa garniture 40, est destinée à venir axialement en appui sur une seconde face d'un disque de frein axialement opposée à la première face du disque lors des phases de freinage. Comme dans le cas de la plaquette intérieure 16, cet appui provoque l'abrasion de la garniture 40 et du disque, générant ainsi des particules.

Comme il ressort des figures 4 et 5, la seconde plaquette 36 comprend une première face 42 qui vient en appui axial sur une première face 56 de l'étrier 12. La première face 42 de la seconde plaquette 36 est similaire ou identique à la face externe 22 de la semelle 18 de la première plaquette 16. La première face 42 de la plaquette 32 et la première face 56 de l'étrier 12 sont avantageusement métalliques.

Avantageusement, lorsque l'étrier 12 est un étrier flottant, la seconde plaquette 36 est montée sur un guide et des glissières (non illustrés). Ainsi, le rapprochement de la seconde plaquette 36 du disque de frein est induit par un déplacement axial de l'étrier 12, notamment de sa partie arrière 39, par rapport au support d'étrier. Un tel déplacement axial de la partie arrière 39 de l'étrier 12 provoque le glissement de la seconde plaquette 36 sur le guide et les glissières sur lesquels elle est montée. La seconde plaquette 36 est donc actionnée directement par la partie arrière 39 de l'étrier 12 flottant. Aussi, dans cette configuration à étrier flottant, un seul piston, en l'espèce le piston 14, permet d'actionner à la fois directement la première plaquette 16 et, indirectement par l'intermédiaire de l'étrier flottant, la seconde plaquette 36.

L'orifice d'aspiration 50 de la seconde plaquette 36 peut être compris dans la première face 42 de la plaquette 36.

La partie arrière 39 de l'étrier 12 peut comporter un orifice d'aspiration 80, visible sur la figure 5. L'orifice d'aspiration 80 traverse la partie arrière 39 de l'étrier 12 entre la première face 56 et l'extérieur de l'étrier 12. Par exemple, l'orifice d'aspiration 80 s'étend sensiblement axialement.

Avantageusement, lorsque la face 42 de la plaquette 36 et la face 56 de l'étrier 12 sont au contact, l'orifice d'aspiration 50 de la plaquette 36 et l'orifice d'aspiration de l'étrier 12 sont alignés. En particulier, l'orifice d'aspiration 80 de l'étrier 12 est apte à venir en appui étanche sur la seconde plaquette 36, en regard de l'orifice d'aspiration 50. La première face 42 de la plaquette 32 et la première face 56 de l'étrier 12 étant métalliques, l'étanchéité entre la seconde plaquette 32 et l'étrier 12 est donc assurée par un contact métal-métal. Grâce à cette étanchéité entre la plaquette 32 et l'étrier 12, les particules générées par l'abrasion de la plaquette 32 et du disque lors des phases de freinage peuvent être aspirées par des moyens d'aspiration tout en limitant les particules libérées dans l'environnement, comme il va être détaillé.

L'orifice d'aspiration 80 de l'étrier 12 peut être apte à venir en appui de façon étanche sur l'orifice d'aspiration 50 de la seconde plaquette 36 en cas de freinage, lorsque des particules sont produites par abrasion. Hors des phases de freinage, la plaquette 36 est repoussée vers la partie arrière 39, ce qui permet également de garder l'étanchéité entre la seconde plaquette 32 et l'étrier 12. Ceci permet d'aspirer les particules restantes lors des phases de nettoyage.

Comme le montre la figure 5, le diamètre D1 de l'orifice d'aspiration 50 de la seconde plaquette 36 peut avoir un diamètre inférieur au diamètre D2 de l'orifice d'aspiration 80 de l'étrier 12. On garantit ainsi qu'un maximum de particules émises lors de la coopération entre la seconde plaquette 36 et le disque de frein sont aspirées par les moyens d'aspiration. En effet, si l'orifice d'aspiration 80 de l'étrier 12 avait le même diamètre ou un diamètre inférieur à celui de l'orifice d'aspiration 50 de la seconde plaquette 36, le risque d'accumulation de particules à l'interface entre les deux orifices d'aspiration 50, 80 serait très important.

Afin de relier les orifices d'aspiration 50, 80 aux moyens d'aspiration, une seconde conduite d'aspiration 90 est prévue dans le dispositif 10. La seconde conduite peut être réalisée dans la continuation de la pièce de fonderie flottante 13B.

La seconde conduite 90 comprend une première extrémité 92 et une seconde extrémité 93.

La première extrémité 92 de la conduite 90 est fixée directement ou indirectement à l'étrier 12. Sur les figures, la première extrémité 92 est directement reliée à l'orifice d'aspiration 80 de l'étrier 12 flottant. Ceci permet de relier indirectement la conduite 90 à la zone d'aspiration 48 de la seconde plaquette 36. Les particules générées par abrasion de la plaquette 36 et du disque peuvent ainsi se déplacer de la zone d'aspiration 48 de la plaquette 36 à la conduite 90 à travers l'orifice 80 de l'étrier.

En particulier, la première extrémité 92 est, au moins en partie, montée serrée ou ajustée dans l'orifice 80. L'étanchéité entre l'étrier 12 et la conduite d'aspiration 90 est ainsi améliorée, ce qui limite le risque que des particules soient expulsées vers l'extérieur du dispositif 10 à l'interface entre l'étrier 12 et la seconde conduite d'aspiration 90.

Sur l'exemple non-limitatif des figures, l'orifice d'aspiration 80 comprend, à une partie d'extrémité 81 opposée à la seconde plaquette 36, un épaulement 82. Grâce à l'épaulement 82, le diamètre D2 de l'orifice d'aspiration 80 de l'étrier 12 augmente à sa partie d'extrémité 81 par rapport au reste de l'orifice 80.

L'épaulement 82 est par exemple sensiblement annulaire. Avantageusement, l'épaulement 82 est conformé pour recevoir la seconde conduite d'aspiration 90, notamment la première extrémité 92 de celle-ci. L'extrémité 92 de la conduite 90 peut en particulier être reçue de manière serrée ou ajustée dans la partie d'extrémité 81 de l'orifice 80.

Comme le diamètre de l'orifice d'aspiration 80 de l'étrier 12 augmente à sa première partie d'extrémité 81 grâce à l'épaulement 82, la conduite d'aspiration 90 peut être reçue dans l'orifice d'aspiration 80 de l'étrier tout en garantissant qu'un canal 94 de la conduite d'aspiration dans lequel s'écoulent les particules a un diamètre égal ou supérieur à celui de l'orifice d'aspiration 80 de l'étrier. On limite ainsi le risque d'accumulation de particules à l'interface entre l'orifice d'aspiration 80 de l'étrier 12 et la seconde conduite d'aspiration 90.

Grâce à la fixation de la conduite d'aspiration 90 sur l'étrier 12, on évite que la seconde conduite d'aspiration 90 exerce des efforts sur la seconde plaquette 36.

La seconde extrémité 93 de la conduite 90 est destinée à être reliée aux moyens d'aspiration. Comme indiqué précédemment, de tels moyens peuvent être un dispositif d'aspiration et de filtration. On note que la première conduite 60 et la seconde conduite 90 peuvent être reliées à un même dispositif d'aspiration et de filtration, ou à des dispositifs d'aspiration et filtration distincts.

La seconde conduite d'aspiration 90 est de préférence constituée entièrement d'une ou plusieurs parties rigides. Par exemple, la seconde conduite d'aspiration peut être réalisée dans une pièce de fonderie flottante de l'étrier.

Comme il ressort clairement de la figure 3, la forme de la conduite 90 peut comprendre un coude 95. Ce coude 95 permet de placer l'extrémité 93 de la conduite 90 du même côté de l'étrier 12 que l'extrémité 63 de la conduite 60. Ainsi, il est plus simple de relier les deux conduites 60, 90 au même dispositif d'aspiration et de filtration.

Comme visible également sur la figure 5, la seconde conduite d'aspiration 90 peut par ailleurs être fixée à l'étrier 12 à partir d'au moins un organe de liaison amovible 96. La conduite 90 peut ainsi être remplacée facilement en cas d'usure. L'organe de liaison amovible 96 est par exemple une vis.

On note qu'après frottement des plaquettes 16, 36 sur le disque de frein, ces plaquettes 16, 36 sont écartées du disque du fait d'un léger voile (non illustré) présent dans le disque. En particulier, les plaquettes 16, 36 sont éloignées du disque lors de sa rotation.

Dans le cas de l'étrier flottant illustré sur les figures, l'écartement des plaquettes 16, 36 du disque de frein se produit lorsque le piston 14 est retracté (et donc, éloigné de la plaquette avant 16) et l'étrier 12 se déplace par rapport au support d'étrier de manière à s'éloigner de la plaquette extérieure 36. Les plaquettes 16, 36 sont ainsi libérées, ce qui permet leur déplacement selon un sens les éloignant du disque de frein par l'action du léger voile du disque.

La présente divulgation ne se limite pas aux exemples de réalisation décrits ci-avant, seulement à titre d'exemple, mais elle englobe toutes les variantes que pourra envisager l'homme de l'art dans le cadre de la protection recherchée. Par exemple, comme illustré sur les figures, chacune des conduites 60, 90 peut comprendre un piquage 120. De préférence, de tels piquages 120 ne sont pas prévus dans le dispositif 10 qui est destiné à être installé dans un véhicule ou dans une machine stationnaire à rotor. Ces piquages 120 sont uniquement utiles lorsque le dispositif 10 est employé pour faire des essais expérimentaux afin de mesurer la dépression dans la conduite qui les porte.

## Revendications

1. Dispositif de freinage à friction (10) comportant un étrier (12), au moins une plaquette (16, 36) mobile en translation selon un axe (A) par rapport à l'étrier (12), ladite plaquette (16, 36) étant destinée à coopérer avec un disque de frein, ladite plaquette (16, 36) comportant au moins une zone d'aspiration de particules (48) comportant un orifice d'aspiration (30, 50) le dispositif (10) comportant en outre une conduite d'aspiration (60, 90) fixée sur l'étrier (12), **caractérisé en ce que** l'étrier (12) comporte un orifice d'aspiration (80) apte à venir en appui étanche sur la plaquette (16, 36) en regard de l'orifice d'aspiration (30, 50) de ladite plaquette (16, 36) de manière à relier ladite conduite d'aspiration (60, 90) et ladite zone d'aspiration (48) de la plaquette (16, 36).

2. Dispositif (10) selon la revendication 1, dans lequel ledit orifice d'aspiration (50) de la plaquette (36) a un diamètre (D1) inférieur au diamètre (D2) de l'orifice d'aspiration (80) de l'étrier (12).

3. Dispositif (10) selon l'une des revendications précédentes, dans lequel une première partie d'extrémité (81) de l'orifice d'aspiration (80) de l'étrier (12) comprend un épaulement (82) sensiblement annulaire conformé pour recevoir ladite conduite d'aspiration (90).

4. Dispositif (10) selon l'une des revendications précédentes, dans lequel ladite conduite d'aspiration (90) est fixée à l'étrier (12) à partir d'au moins un organe de liaison amovible (96).

5. Dispositif selon l'une des revendications précédentes, dans lequel ladite conduite d'aspiration (90) est réalisée dans la continuation d'une pièce de fonderie flottante (13B) de l'étrier (12).

6. Dispositif (10) selon l'une des revendications précédentes, dans lequel l'orifice d'aspiration (50) de la plaquette (36) est compris dans une première face (42) de la plaquette (36), la première face (42) de la plaquette (36) étant métallique et venant en appui étanche sur une première face (58) métallique de l'étrier (12) sur laquelle débouche l'orifice d'aspiration (80) de l'étrier (12).

7. Dispositif (10) selon l'une des revendications précédentes, dans lequel l'étrier (12) est un étrier flottant apte à être déplacé axialement en translation par rapport à un support d'étrier, le dispositif (10) comportant une première plaquette (16) dite plaquette intérieure et une seconde plaquette (36) dite plaquette extérieure, la première plaquette (16) étant actionnée directement par un piston (14), la seconde plaquette (36) étant actionnée directement par une partie arrière (39) de l'étrier (12) flottant, une première conduite d'aspiration (60) étant apte à être reliée à une zone d'aspiration de particules (28) de la première plaquette (16), une seconde conduite d'aspiration (90) étant apte à être reliée à une zone d'aspiration de particules (48) de la seconde plaquette (36), chacune des zones d'aspiration de particules (28, 48) de la première plaquette (16) et la seconde plaquette (36) comportant un orifice d'aspiration (30, 50) respectif.

8. Système de freinage comportant un disque de frein et un dispositif de freinage à friction (10) selon l'une des revendications précédentes.

## Patentansprüche

1. Reibungsbremsvorrichtung (10) mit einem Bremssattel (12), mindestens einem Belag (16, 36), der translatorisch entlang einer Achse (A) relativ zum Bremssattel (12) beweglich ist, wobei der Belag (16, 36) dazu bestimmt ist, mit einer Bremsscheibe zusammenzuwirken, wobei der Belag (16, 36) mindestens einen Partikelansaugbereich (48) mit einer Ansaugöffnung (30, 50) aufweist, wobei die Vorrichtung (10) ferner eine am Bremssattel (12) befestigte Saugleitung (60, 90) aufweist, **dadurch gekennzeichnet, dass** der Bremssattel (12) eine Ansaugöffnung (80) aufweist, die dazu geeignet ist, an dem Belag (16, 36) gegenüber der Ansaugöffnung (30, 50) des Belags (16, 36) in dichter Anlage zu kommen, um die Saugleitung (60, 90) und den Partikelansaugbereich (48) des Belags (16, 36) zu verbinden.

2. Vorrichtung (10) nach Anspruch 1, wobei die Ansaugöffnung (50) des Belags (36) einen Durchmesser (D1) hat, der kleiner als der Durchmesser (D2) der Ansaugöffnung (80) des Bremssattels (12) ist.

3. Vorrichtung (10) nach einem der vorhergehenden Ansprüche, wobei ein erster Endabschnitt (81) der Ansaugöffnung (80) des Bremssattels (12) eine im Wesentlichen ringförmige Schulter (82) aufweist, die dazu ausgeformt ist, die Saugleitung (90) aufzunehmen.

4. Vorrichtung (10) nach einem der vorhergehenden Ansprüche, wobei die Saugleitung (90) an dem Bremssattel (12) durch mindestens ein abnehmbares Verbindungselement (96) befestigt ist.

5. Vorrichtung (10) nach einem der vorhergehenden Ansprüche, wobei die Saugleitung (90) in der Fortsetzung eines schwimmenden Gussstücks (13B) des Bremssattels (12) ausgebildet ist.

6. Vorrichtung (10) nach einem der vorhergehenden Ansprüche, wobei die Ansaugöffnung (50) des Belags (36) in einer ersten Fläche (42) des Belags (36) enthalten ist, wobei die erste Fläche (42) des Belags (36) metallisch ist und an einer ersten metallischen Fläche (58) des Bremssattels (12), in die die Ansaugöffnung (80) des Bremssattels (12) mündet, in dichter Anlage kommt.

7. Vorrichtung (10) nach einem der vorhergehenden Ansprüche, wobei der Bremssattel (12) ein schwimmender Bremssattel ist, der dazu geeignet ist, axial translatorisch relativ zu einem Bremssattelträger verschoben zu werden, wobei die Vorrichtung (10) einen ersten Belag (16), innerer Belag genannt, und einen zweiten Belag (36), äußerer Belag genannt, aufweist, wobei der erste Belag (16) direkt von einem Kolben (14) betätigt wird, der zweite Belag (36) direkt von einem hinteren Teil (39) des schwimmenden Bremssattels (12) betätigt wird, eine erste Saugleitung (60) dazu geeignet ist, mit einem Partikelansaugbereich (28) des ersten Belags (16) verbunden zu werden, eine zweite Saugleitung (90) dazu geeignet ist, mit einem Partikelansaugbereich (48) des zweiten Belags (36) verbunden zu werden, wobei jeder der Partikelansaugbereiche (28, 48) des ersten Belags (16) und des zweiten Belags (36) eine jeweilige Ansaugöffnung (30, 50) aufweist.

8. Bremssystem, umfassend eine Bremsscheibe und eine Reibungsbremsvorrichtung (10) nach einem der vorhergehenden Ansprüche.

## Claims

1. Friction braking device (10) comprising a caliper (12), at least one pad (16, 36) movable in translation along an axis (A) relative to the caliper (12), said pad (16, 36) being intended to cooperate with a brake disc, said pad (16, 36) comprising at least one particle suction zone (48) comprising a suction orifice (30, 50), the device (10) further comprising a suction duct (60, 90) fixed on the caliper (12), **characterized in that** the caliper (12) comprises a suction orifice (80) suitable for coming into leaktight abutment on the pad (16, 36), facing the suction orifice (30, 50) of said pad (16, 36), so as to connect said suction duct (60, 90) and said particle suction zone (48) of the pad (16, 36).

2. Device (10) according to claim 1, wherein said suction orifice (50) of the pad (36) has a diameter (D1) smaller than the diameter (D2) of the suction orifice (80) of the caliper (12).

3. Device (10) according to any one of the preceding claims, wherein a first end portion (81) of the suction orifice (80) of the caliper (12) comprises a substantially annular shoulder (82) configured to receive said suction duct (90).

4. Device (10) according to any one of the preceding claims, wherein said suction duct (90) is fixed to the caliper (12) by at least one removable connecting member (96).

5. Device (10) according to any one of the preceding claims, wherein said suction duct (90) is made in the continuation of a floating cast part (13B) of the caliper (12).

6. Device (10) according to any one of the preceding claims, wherein the suction orifice (50) of the pad (36) is comprised in a first face (42) of the pad (36), the first face (42) of the pad (36) being metallic and coming into leaktight abutment on a first metallic face (58) of the caliper (12) into which the suction orifice (80) of the caliper (12) opens.

7. Device (10) according to any one of the preceding claims, wherein the caliper (12) is a floating caliper suitable for being displaced axially in translation relative to a caliper support, the device (10) comprising a first pad (16) called inner pad and a second pad (36) called outer pad, the first pad (16) being directly actuated by a piston (14), the second pad (36) being directly actuated by a rear part (39) of the floating caliper (12), a first suction duct (60) being suitable for being connected to a particle suction zone (28) of the first pad (16), a second suction duct (90) being suitable for being connected to a particle suction zone (48) of the second pad (36), each of the particle suction zones (28, 48) of the first pad (16) and the second pad (36) comprising a respective suction orifice (30, 50).

8. Braking system comprising a brake disc and a friction braking device (10) according to any one of the preceding claims.
